# EUROPEAN PATENT SPECIFICATION

(11) **EP 2 790 405 B1**
(45) Date of publication and mention of the grant of the patent: **30.05.2018**
(21) Application number: 14163997.1
(22) Date of filing: 09.04.2014
(51) Int. Cl.: H04N 13/02

(54) **Three-dimensional image conversion apparatus for converting two-dimensional image into three-dimensional image and method for controlling the conversion apparatus**
Dreidimensionale Bildumwandlungsvorrichtung zur Umwandlung eines zweidimensionalen Bildes in ein dreidimensionales Bild und Verfahren zur Steuerung der Umwandlungsvorrichtung
Appareil de conversion d'image tridimensionnelle pour la conversion d'image en deux dimensions en image tridimensionnelle et procédé de commande de l'appareil de conversion

(30) Priority: 09.04.2013 KR 20130038630
(43) Date of publication of application: 15.10.2014
(73) Proprietor: Samsung Electronics Co., Ltd., Suwon-si, Gyeonggi-do 443-742 (KR)
(72) Inventor: Lee, Shin-Jun, 443-742 Gyeonggi-do (KR); Lee, Ba-Do, 443-742 Gyeonggi-do (KR); Kwak, Han-Tak, 443-742 Gyeonggi-do (KR); Kim, Se-Hoon, 443-742 Gyeonggi-do (KR); Woo, Ji-Hwan, 443-742 Gyeonggi-do (KR); Lim, Tae-Gyu, 443-742 Gyeonggi-do (KR); Cho, Sung-Dae, 443-742 Gyeonggi-do (KR)
(74) Representative: HGF Limited

(56) References cited:
- EP-A2- 2 568 439
- WO-A2-2007/148219
- US-A1- 2007 279 412
- XI YAN ET AL: "Depth map generation for 2D-to-3D conversion by limited user inputs and depth propagation", 3DTV CONFERENCE: THE TRUE VISION - CAPTURE, TRANSMISSION AND DISPLAY OF 3D VIDEO (3DTV-CON), 2011, IEEE, 16 May 2011 (2011-05-16), pages 1-4, XP031993737, DOI: 10.1109/3DTV.2011.5877167 ISBN: 978-1-61284-161-8

## Description

### TECHNICAL FIELD

The present disclosure relates to a three-Dimensional (3D) image conversion apparatus for converting a two-Dimensional (2D) image into a 3D image and a method for controlling the 3D conversion apparatus.

### BACKGROUND

With the recent increasing interest in three-Dimensional (3D) images, research has been conducted into generation of 3D images. From the early stage of research on 3D graphics, the ultimate object of researchers is to generate a realistic graphic screen like a real image. Thus, research has been carried out using a polygonal model in the field of traditional modeling technology, and as a result, modeling and rendering have been developed enough to provide a very realistic 3D environment. However, a process of generating a complex model needs much effort and time of experts. Moreover, a realistic and complex environment needs a significant amount of information, and causes low efficiency in storage and transmission.

To address this issue, various 3D image rendering technologies have been developed.

However, when a 3D image is generated using different methods of the related art, depth information has to be given to objects of an image and such an operation performed for each frame increases time and computation. Moreover, in segmentation for identifying respective objects, a boundary of each object has to be designated.

Therefore, a need exists for a 3D image conversion apparatus for converting a 2D image into a 3D image and a method for controlling the 3D conversion apparatus.

The above information is presented as background information only to assist with an understanding of the present disclosure. No determination has been made, and no assertion is made, as to whether any of the above might be applicable as prior art with regard to the present disclosure.

EP2568439 A2 discloses an apparatus for generating depth information from a two-dimensional image in order to generate a three-dimensional image.

WO 2007/148219 A2 discloses a method for two-dimensional to three-dimensional conversion using an user interface for object segmentation. US2007/279412 A1 discloses a method for infilling for two-dimensional to three-dimensional image conversion.

"Depth Map Generation for 2D-to-3D Conversion by Limited User Inputs and Depth Propagation" Xi Yan et al, 3DTV Conference: The True Vision - Capture, Transmission and Display of 3D Video (3DTV-Con) 16 May 2011 discloses depth map generation for two-dimensional to three-dimensional image conversion.

### SUMMARY

Aspects of the present disclosure are to address at least the above-mentioned problems and/or disadvantages and to provide at least the advantages described below. Accordingly, an aspect of the present disclosure is to provide a three-Dimensional (3D) image conversion apparatus for converting a 3D image into a two-Dimensional (2D) image by designating an object through a user input and a method for controlling the 3D conversion apparatus.

In accordance with an aspect of the present disclosure, a method for controlling a 3D image conversion apparatus that converts a 2D image into a 3D image is defined in claim 1. The method includes displaying the 2D image to be converted into the 3D image, receiving a user input designating at least one object included in the 2D image, obtaining boundaries of the at least one object included in the 2D image based on the received user input to identify each of the at least one object, analyzing the 2D image including the at least one object to obtain depth information of each of the at least one object, and arranging the identified each of the at least one object based on the obtained depth information to generate the 3D image.

In accordance with another aspect of the present disclosure, a 3D image conversion apparatus for converting a 2D image into a 3D image is defined in claim 7. The 3D image conversion apparatus includes a touch screen configured to display the 2D image to be converted into the 3D image and receive a user input designating at least one object included in the 2D image and a controller configured to obtain boundaries of the at least one object included in the 2D image based on the received user input to identify each of the at least one object, to analyze the 2D image including the at least one object to obtain depth information of each of the at least one object, and to arrange the identified each of the at least one object based on the obtained depth information to generate the 3D image.

In accordance with another aspect of the present disclosure, a control method for a server transmitting data to and receiving data from a first terminal and a second terminal is provided. The control method includes receiving a 2D image from the first terminal, receiving a user input designating at least one object included in the 2D image, obtaining boundaries of the at least one object included in the 2D image based on the received user input to identify each of the at least one object, analyzing the 2D image including the at least one object to obtain depth information of each of the at least one object, and arranging the identified each of the at least one object based on the obtained depth information to generate a 3D image.

In accordance with another aspect of the present disclosure, a server for transmitting data to and receiving data from a first terminal and a second terminal is provided. The server includes a communication unit configured to receive a 2D image from the first terminal, a touch screen configured to display the 2D image and receive a user input designating at least one object included in the 2D image, and a controller configured to obtain boundaries of the at least one object included in the 2D image based on the received user input to identify each of the at least one object, to analyze the 2D image including the at least one object to obtain depth information of each of the at least one object, and to arrange the identified each of the at least one object based on the obtained depth information to generate a 3D image.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a schematic block diagram illustrating a three-Dimensional (3D) image conversion apparatus according to an embodiment of the present disclosure;
FIG. 2 is a flowchart illustrating a method for controlling a 3D image conversion apparatus according to an embodiment of the present disclosure;
FIGS. 3A, 3B, 3C, 3D, 3E, 3F, 3G, 3H, and 3I illustrate a method for controlling a 3D image conversion apparatus according to an embodiment of the present disclosure;
FIG. 4A is a flowchart illustrating a method for controlling a 3D image conversion apparatus according to an embodiment of the present disclosure;
FIG. 4B is a flowchart illustrating a method for controlling a 3D image conversion apparatus according to an embodiment of the present disclosure;
FIGS. 5A, 5B, and 5C illustrate a method for controlling a 3D image conversion apparatus according to an embodiment of the present disclosure;
FIG. 6 is a block diagram illustrating a controller of a 3D image conversion apparatus according to an embodiment of the present disclosure;
FIG. 7 is a flowchart illustrating a method for controlling a 3D image conversion apparatus according to an embodiment of the present disclosure;
FIGS. 8A, 8B, 8C, 8D, 8E, and 8F illustrate a 3D conversion process for an indoor background image according to an embodiment of the present disclosure;
FIG. 9A is a flowchart for describing a method for controlling a 3D image conversion apparatus according to an embodiment of the present disclosure;
FIG. 9B is a flowchart for describing a method for controlling a 3D image conversion apparatus according to an embodiment of the present disclosure;
FIGS. 10A, 10B, 10C, 10D, 10E, and 10F illustrate a method for controlling a 3D image conversion apparatus according to an embodiment of the present disclosure;
FIG. 11A is a flowchart illustrating a method for controlling a 3D image conversion apparatus according to an embodiment of the present disclosure;
FIG. 11B is a flowchart illustrating a method for controlling a 3D image conversion apparatus according to an embodiment of the present disclosure;
FIGS. 12A, 12B, 12C, and 12DB illustrate a method for controlling a 3D image conversion apparatus according to an embodiment of the present disclosure;
FIG. 13 illustrates a communication system according to an embodiment of the present disclosure;
FIG. 14 is a ladder diagram for describing respective operations of a first terminal and a second terminal according to an embodiment of the present disclosure;
FIG. 15 illustrates a communication system according to an embodiment of the present disclosure; and
FIGS. 16A, 16B, and 16C are ladder diagrams for describing respective operations of a server, a first terminal, and a second terminal according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known function and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

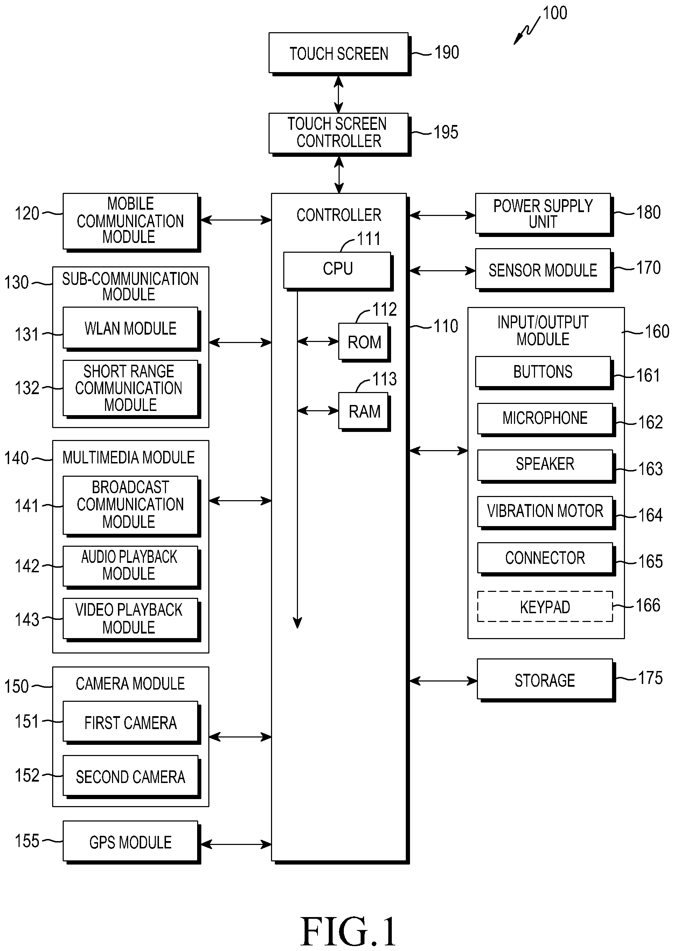

FIG. 1 is a schematic block diagram illustrating a three-Dimensional (3D) image conversion apparatus according to an embodiment of the present disclosure.

Referring to FIG. 1, a 3D image conversion apparatus 100 may be connected with an external electronic device (not illustrated) by using at least one of a communication module 120, a sub communication module 130 and a connector 165. The external device may include another device (not illustrated), a cellular phone (not illustrated), a smart phone (not illustrated), a tablet Personal Computer (PC, not illustrated), and a server (not illustrated).

Referring to FIG. 1, the 3D image conversion apparatus 100 may include a touch screen 190 and a touch screen controller 195. The 3D image conversion apparatus 100 may also include a controller 110, the communication module 120, the sub communication module 130, a multimedia module 140, a camera module 150, a Global Positioning System (GPS) module 155, an input/output module 160, a sensor module 170, a storage 175, and a power supply unit 180. The sub communication module 130 may include at least one of a Wireless Local Area Network (WLAN) module 131 and a short-range communication module 132. The multimedia module 140 may include at least one of a broadcast communication module 141, an audio playback module 142, and a video playback module 143. The camera module 150 may include at least one of a first camera 151 and a second camera 152. The input/output module 160 may include buttons 161, a microphone 162, a speaker 163, a vibration motor164, the connector 165, and a keypad 166.

The controller 110 may include a Central Processing Unit (CPU) 111, a Read Only Memory (ROM) 112 in which a control program for controlling the 3D image conversion apparatus 100 is stored, and a Random Access Memory (RAM) 113 which memorizes a signal or data input from the 3D image conversion apparatus 100 or is used as a memory region for a task performed in the 3D image conversion apparatus 100. The CPU 111 may include a single core, a dual core, a triple core, or a quad core processor. The CPU 111, the ROM 112, and the RAM 113 may be interconnected through an internal bus.

The controller 110 may control the communication module 120, the sub communication module 130, the multimedia module 140, the camera module 150, the GPS module 155, the input/output module 160, the sensor module 170, the storage 175, the power supply unit 180, a first touch screen 190a, a second touch screen 190b, and the touch screen controller 195.

The mobile communication module 120 may facilitate the connection between the 3D image conversion apparatus 100 and an external device through mobile communication by using one or more antennas (not illustrated) under control of the controller 110. The mobile communication module 120 transmits/receives a wireless signal for a voice call, a video call, a text message (a Short Messaging Service (SMS)), and/or a multimedia message (a Multi Media Service (MMS)) with a cellular phone (not illustrated), a smart phone (not illustrated), a tablet PC, or another electronic device (not illustrated) which has a phone number input into the 3D image conversion apparatus 100.

The sub communication module 130 may include at least one of the WLAN module 131 and the short-range communication module 132. Alternatively, the sub communication module 130 may include either the WLAN module 131 or the short-range communication module 132, or both.

The WLAN module 131 may be connected to the Internet in a place where a wireless AP (not illustrated) is installed, under control of the controller 110. The WLAN module 131 supports the wireless LAN standard IEEE802.11x of the Institute of Electrical and Electronics Engineers (IEEE). The short-range communication module 132 may wirelessly perform short-range communication between the 3D image conversion apparatus 100 and an external electronic device under control of the controller 110. The short-range communication may include Bluetooth, Infrared Data Association (IrDA), or the like.

The 3D image conversion apparatus 100 may include at least one of the mobile communication module 120, the WLAN module 131, and the short-range communication module 132. For example, the 3D image conversion apparatus 100 may include a combination of the mobile communication module 120, the WLAN module 131, and the short-range communication module 132.

The multimedia module 140 may include the broadcast communication module 131, the audio playback module 142, or the video playback module 143. The broadcast communication module 141 receives a broadcast signal (for example, a TV broadcast signal, a radio broadcast signal, or a data broadcast signal) and broadcast additional information (for example, Electric Program Guide (EPG) or Electric Service Guide (ESG)) transmitted from a broadcasting station (not shown) via a broadcast communication antenna (not illustrated) under control of the controller 110. The audio playback module 142 may play a digital audio file (for example, a file having a file extension, such as 'mp3', 'wma', 'ogg', or 'wav') stored in the storage 175 or received under control of the controller 110. The video playback module 143 may play a digital video file (for example, a file having a file extension, such as 'mpeg', 'mpg', 'mp4', 'avi', 'mov', or 'mkv') stored or received under control of the controller 110. The video playback module 143 may play a digital audio file.

The multimedia module 140 includes the audio playback module 142 or the video playback module 143. The audio playback module 142 or the video playback module 143 of the multimedia module 140 may be included in the controller 110.

The camera module 150 may include the first camera 151 and the second camera 152 which capture a still image or a video under control of the controller 110. The camera module 150 may include an auxiliary light source (for example, a flash, not illustrated) for providing light necessary for photographing. The first camera 151 may be positioned on the front surface of the 3D image conversion apparatus 100, and the second camera 152 may be positioned on the rear surface of the 3D image conversion apparatus 100. In another embodiment, the first camera 151 and the second camera 152 may be positioned adjacent to each other (for example, a space between the first camera 151 and the second camera 152 is greater than 1 cm and less than 8 cm) to capture a 3D still image or a 3D moving image.

The GPS module 155 receives electric waves from a plurality of GPS satellites (not illustrated) in the Earth's orbit, and calculates a location of the portable device 100 by using a time of arrival from the GPS satellite (not illustrated) to the 3D image conversion apparatus 100.

The input/output module 160 may include a plurality of buttons 161, the microphone 162, the speaker 163, the vibration motor 164, the connector 165, and the keypad 166.

The buttons 161 161 may be formed on at least one of a front surface, a side surface, and a rear surface of a housing (or case) of the 3D image conversion apparatus 100, and may include at least one of a power/lock button, a volume button, a menu button, a home button, a back button, and a search button.

The microphone 162 receives voice or sound and generates a corresponding electric signal under control of the controller 110.

The speaker 163 outputs sound corresponding to various signals or data (for example, wireless data, broadcast data, digital audio data, digital video data, or the like) under control of the controller 110. The speaker 163 may output sound corresponding to a function executed by the 3D image conversion apparatus 100 (for example, button manipulation sound corresponding to a phone call, a ring back tone, or voice of a counterpart user). One or more speakers 163 may be formed in a proper position or proper positions of the housing of the 3D image conversion apparatus 100.

The vibration motor 164 converts an electric signal into mechanical vibration under control of the controller 110. For example, in the 3D image conversion apparatus 100, in a vibration mode, if a voice call or a video call from another device (not illustrated) is received, the vibration motor 164 operates. One or more of the vibration motor 164 may be disposed in the housing of the 3D image conversion apparatus 100. The vibration motor 164 may operate in response to user input generated through the touch screen 190.

The connector 165 may be used as an interface for connecting the 3D image conversion apparatus 100 with an external device (not illustrated) or a power source (not illustrated). Under control of the controller 110, data stored in the storage 175 of the 3D image conversion apparatus 100 may be transmitted to an external electronic device or data may be received from the external electronic device through a wired cable connected to the connector 165. The 3D image conversion apparatus 100 receives power from the power source through the wired cable connected to the connector 165 or may charge a battery (not illustrated) by using the power source.

The keypad 166 receives key input from the user for control of the 3D image conversion apparatus 100. The keypad 166 includes a physical keypad (not illustrated) formed in the 3D image conversion apparatus 100 or a virtual keypad (not illustrated) displayed on the touch screen 190. The physical keypad (not illustrated) formed in the 3D image conversion apparatus 100 may be excluded according to the capability or structure of the 3D image conversion apparatus 100.

The sensor module 170 includes at least one sensor for detecting a state of the 3D image conversion apparatus 100. For example, the sensor module 170 may include at least one of a proximity sensor for detecting the user's proximity with respect to the 3D image conversion apparatus 100, an illumination sensor (not illustrated) for detecting an amount of light around the 3D image conversion apparatus 100, and a motion sensor (not illustrated) for detecting an operation of the 3D image conversion apparatus 100 (for example, rotation of the 3D image conversion apparatus 100 or acceleration or vibration applied to the 3D image conversion apparatus 100).

At least one sensor may detect a state, generate a signal corresponding to the detection, and transmit the signal to the controller 110. The sensors of the sensor module 170 may be removed or sensors may be added thereto according to the capability of the 3D image conversion apparatus 100.

The storage 175 stores a signal or data which is input/output corresponding to operations of the communication module 120, the sub communication module 130, the multimedia module 140, the camera module 150, the GPS module 155, the input/output module 160, the sensor module 170, and the touch screen 190, under control of the controller 110. The storage 175 stores a control program and applications for control of the 3D image conversion apparatus 100 and/or the controller 110.

The term "storing unit" includes the storing unit 175, the ROM 112 and the RAM 113 in the controller 110, or a memory card (not illustrated) mounted in the 3D image conversion apparatus 100 (for example, a Secure Digital (SD) card, a memory stick). The storing unit 175 may include a non-volatile memory, a volatile memory, a Hard Disk Drive (HDD), or a Solid State Drive (SSD).

The power supply unit 180 supplies power to one or more batteries disposed in the housing of the portable terminal 100 under control of the controller 110. The one or more batteries supply power to the 3D image conversion apparatus 100. The power supply unit 180 may also supply power input from an external power source through the wired cable connected with the connector 165 to the 3D image conversion apparatus 100. The power supply unit 180 may also supply power, which is wirelessly input from an external power source using a wireless charging technique, to the 3D image conversion apparatus 100.

The touch screen 190 provides a user graphic interface corresponding to various services (for example, call, data transmission, broadcasting, picture taking) to users. The touch screen 190 outputs an analog signal, which corresponds to at least one input to the user graphic interface, to the touch screen controller 195. The touch screen 190 receives at least one user inputs through a user's body (for example, a finger including a thumb) or an input unit (for example, a stylus pen 1). The touch screen 190 also receives a continuous movement of one of at least one touches. The touch screen 190 outputs an analog signal corresponding to the received continuous movement of the touch to the touch screen controller 195.

In an embodiment of the present disclosure, a touch is not limited to a contact between the touch screen 190 and a user's body or a touchable input unit, and may also include a non-contact touch (for example, when the user input unit is positioned within a distance of, for example, 1 cm) in which the user input unit may be detected. A distance or interval from the touch screen 190 within which the user input unit may be detected may be changed according to the capability or structure of the 3D image conversion apparatus 100.

The touch screen 190 may be implemented as, for example, a resistive type, a capacitive type, an infrared type, an acoustic wave type, or a combination thereof.

The touch screen controller 195 converts the analog signal received from the touch screen 190 into a digital signal (for example, X and Y coordinates) and transmits the digital signal to the controller 110. The controller 110 controls the touch screen 190 by using the digital signal received from the touch screen controller 195. For example, the controller 110 may control a shortcut icon (not illustrated) displayed on the touch screen 190 to be selected or executed in response to a touch. The touch screen controller 195 may be included in the controller 110.

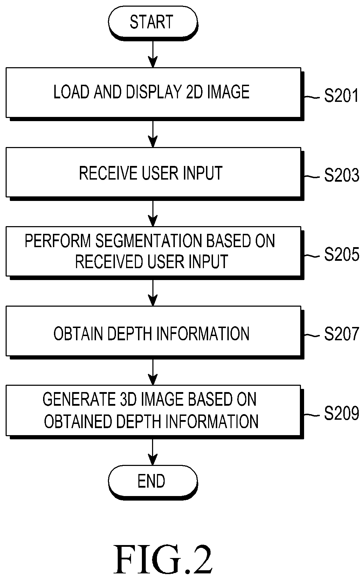

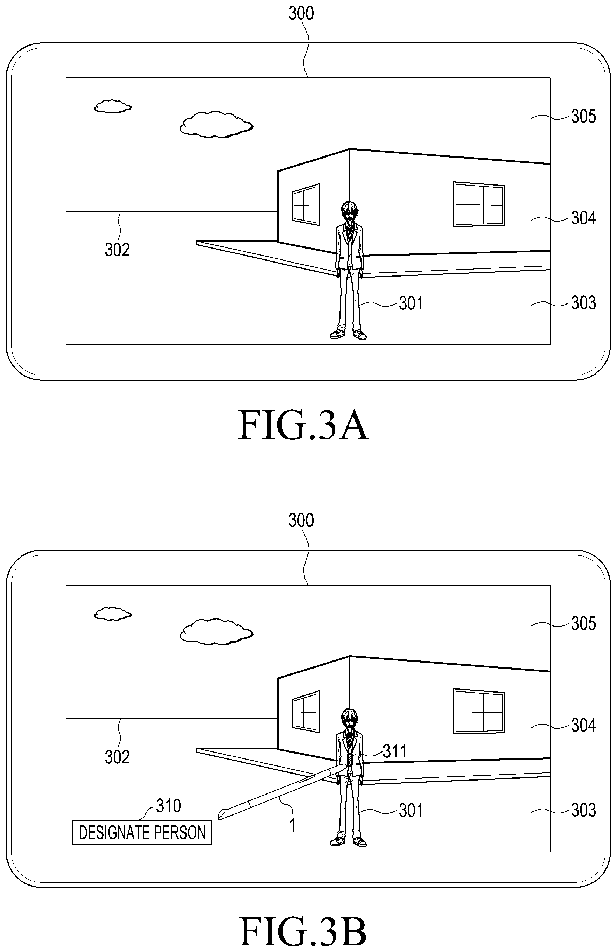

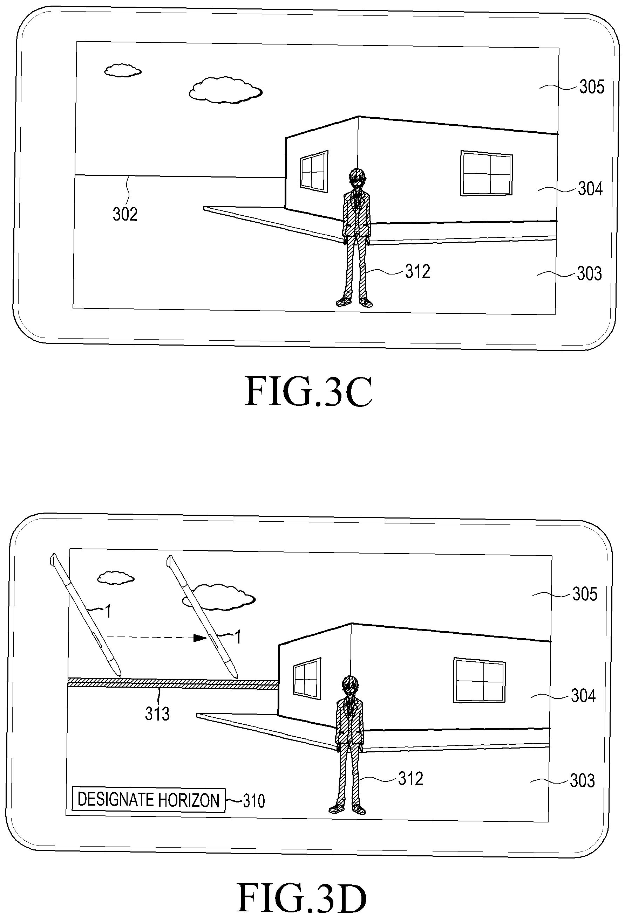

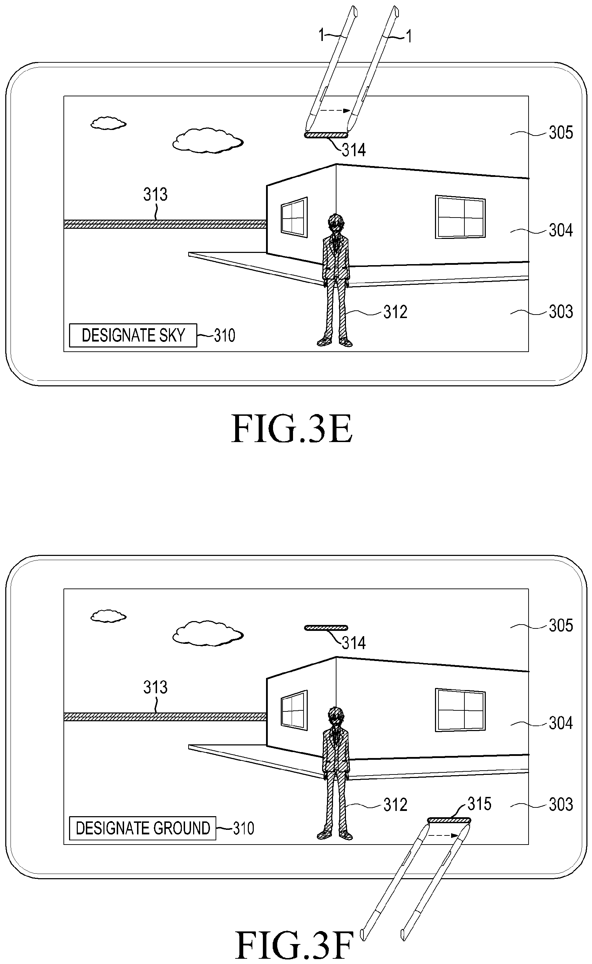

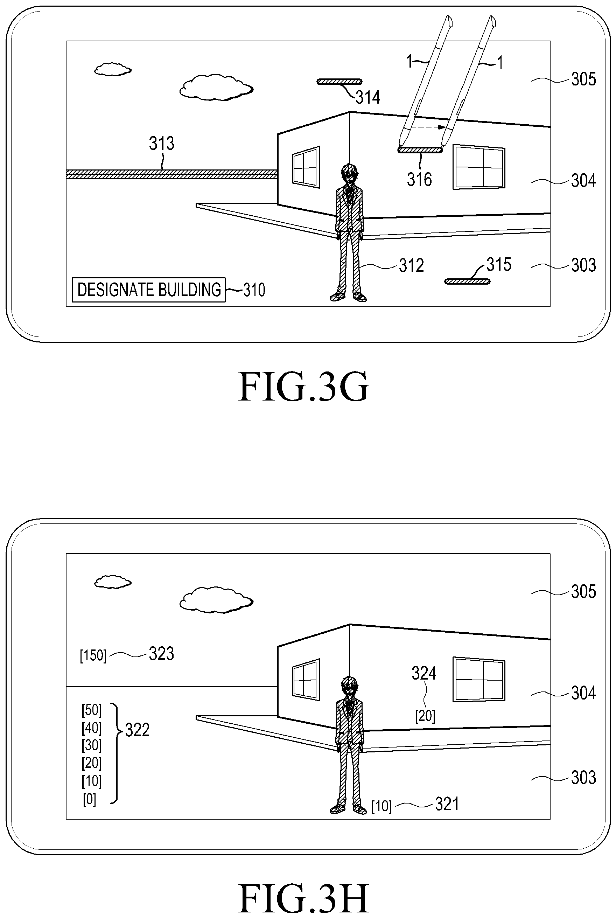

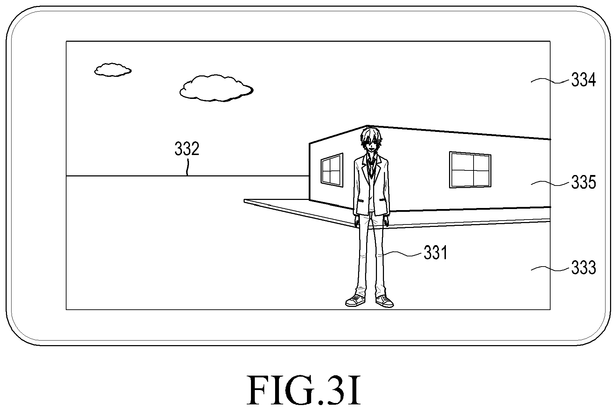

FIG. 2 is a flowchart illustrating a method for controlling a 3D image conversion apparatus according to an embodiment of the present disclosure. The control method illustrated in FIG. 2 will be described below with reference to FIGS. 3A, 3B, 3C, 3D, 3E, 3F, 3G, 3H, and 3I.

FIGS. 3A, 3B, 3C, 3D, 3E, 3F, 3G, 3H, and 3I illustrate a method for controlling a 3D image conversion apparatus according to an embodiment of the present disclosure.

The 3D image conversion apparatus 100 loads and displays a 2D image on a touch screen in operation S201. The 3D image conversion apparatus 100 captures an object to store a 2D image or receives a 2D image through communication from another device and stores the 2D image. For example, the 3D image conversion apparatus 100 may display a 2D image 300 as illustrated in FIGS. 3A, 3B, 3C, 3D, 3E, 3F, 3G, 3H, and 3I on the touch screen.

Referring to FIG. 3A, the 2D image 300 may include a plurality of objects. For example, the 2D image 300 may include objects, such as a person 301, the horizon 302, the ground 303, a building 304, and the sky 305. Herein, the 2D image 300 may be generated in various manners, such as jpg, dib, jpeg, gif, tif, png, and so forth, or may be a raw file.

Referring to FIG. 2, the 3D image conversion apparatus 100 receives a user input designating an object in operation S203. Herein, the user input may correspond to a basic value for performing segmentation with respect to the object, and may be a gesture designating the inside of the object. As will be described below, the 3D image conversion apparatus 100 may search for at least one of an edge, a corner point, and a blob around the user input to perform segmentation with respect to the object. For example, the search for at least one of the edge, the corner point, and the blob spreads from the center of the user input to the periphery of the user input.

Referring to FIG. 3B, a user inputs a user input by using a finger or a pen 1. In an embodiment illustrated in FIG. 3B, the user inputs a user input 311 with respect to an object, the person 301. The user may arbitrarily input a user input 311 with respect to the object, the person 301. The user may also input the user input 311 based on a preset object designation order indicated on a designating-object indication window 310.

The 3D image conversion apparatus 100 may store the preset object designation order. For example, the 3D image conversion apparatus 100 may store an object designation order of person-horizon-sky-ground-building with respect to an outdoor image. The 3D image conversion apparatus 100 indicates an object to be designated on the designating-obj ect indication window 310 based on the stored object designation order. In the embodiment illustrated in FIG. 3B, the 3D image conversion apparatus 100 displays a message inviting designation of the person 301 on the designating-object indication window 310. The preset object designation order is merely an example, and it will be understood by those of ordinary skill in the art that the object designation order may be changed. Moreover, it will be also understood by those of ordinary skill in the art that various types of objects may be added to or replaced with the person, the horizon, the sky, the ground, and the building.

Referring to FIG. 3C, upon reception of the user input in operation S203, the 3D image conversion apparatus 100 displays an indication to allow the user to recognize reception of the user input. For example, the 3D image conversion apparatus 100 indicates that the user input is inputted by displaying the object for which the user input is inputted in a different color or a different brightness 312.

Referring to FIGS. 3D, 3E, 3F, and 3G, the 3D image conversion apparatus 100 additionally receives a user input with respect to other objects. The 3D image conversion apparatus 100 receives user inputs 313, 314, 315, and 316 with respect to a horizon object 302, a ground object 303, a building object 304, and a sky object 305. For example, the 3D image conversion apparatus 100 may display a message inviting designation of the horizon on the designating-object indication window 310 as illustrated in FIG. 3D. The 3D image conversion apparatus 100 may display a message inviting designation of the sky on the designating-object indication window 310 as illustrated in FIG. 3E. The 3D image conversion apparatus 100 may display a message inviting designation of the ground on the designating-object indication window 310 as illustrated in FIG. 3F. The 3D image conversion apparatus 100 may display a message inviting designation of the building on the designating-object indication window 310 as illustrated in FIG. 3G. The 3D image conversion apparatus 100 may display a message on the designating-object indication window 310 based on the preset object designation order.

The 3D image conversion apparatus 100 may receive a user input 313 as a drag gesture input for the horizon object as illustrated in FIG. 3D. The 3D image conversion apparatus 100 may receive a user input 314 as a drag gesture input for the sky object as illustrated in FIG. 3E. The 3D image conversion apparatus 100 may receive a user input 315 as a drag gesture input for the ground object as illustrated in FIG. 3F. The 3D image conversion apparatus 100 may receive a user input 316 as a drag gesture input for the building object as illustrated in FIG. 3G.

As illustrated in FIGS. 3B, 3C, 3D, 3E, 3F, and 3G, the 3D image conversion apparatus 100 may receive a user input with respect to each object in operation S203. Referring back to FIG. 2, the 3D image conversion apparatus 100 performs segmentation by obtaining a boundary of an object based on the received user input and identifying each object based on the obtained boundary in operation S205. For example, the 3D image conversion apparatus 100 may perform segmentation in various manners, such as graph cut, lazy snapping, and the like. The 3D image conversion apparatus 100 according to an embodiment of the present disclosure may search for at least one of an edge, a corner point, and a blob around a user input.

Herein, the edges may be made by points that form a line of a boundary between regions having a difference in pixel value therebetween. For example, the edges may be formed of points having non-zero first-order partial derivative values of a captured image. The edges may be obtained by calculating a partial derivative of a visible-ray captured image and using the calculated partial derivative value.

The corner points may be formed of a set of points having extremums of a captured image, and may be points having zero first-order partial derivative values and non-zero second-order partial derivative values of the captured image. Points that cannot be differentiated with respect to the captured image may also be regarded as extremums and determined as the corner points. The corner points may be obtained as unique values of a Hessian matrix introduced by Harris corner detection. The entire Hessian matrix may be formed of second-order partial derivatives of a continuous function.

The blob indicates a region having a larger or smaller pixel value than that of the periphery. The blob may be obtained using a Laplacian or Laplace operator of a second-order partial derivative with respect to each dimension (an x dimension and a y dimension) in a visible-ray captured image.

Referring back to FIG. 2, the 3D image conversion apparatus 100 obtains depth information with respect to each segmented object in operation S207. The 3D image conversion apparatus 100 may obtain depth information as illustrated in FIG. 3H. The 3D image conversion apparatus 100 obtains depth information 321 of "10" with respect to the person object. The 3D image conversion apparatus 100 obtains depth information 322 of "0" to "50" with respect to the ground object. The 3D image conversion apparatus 100 obtains depth information 323 of "150" with respect to the sky object. The 3D image conversion apparatus 100 obtains depth information 324 of "20" with respect to the building object. Herein, the depth information may indicate that an object having depth information close to "0" is located more in front and an object having depth information close to "150" is located more behind.

Referring to FIG. 3H, the 3D image conversion apparatus 100 may obtain depth information according to an occlusion relationship between objects. For example, the person object occludes the building object, such that the 3D image conversion apparatus 100 determines that the person object is situated in front of the building object. The 3D image conversion apparatus 100 obtains the depth information 321 of "10" for the person object ad the depth information 324 of "20" for the building object, thus obtaining the depth information such that the person object is situated in front of the building object.

The 3D image conversion apparatus 100 may also obtain depth information based on a start position of the ground object 303. For example, it can be seen from FIG. 3G that a position of a foot from which the person object starts is under a position from which the building object starts, such that the 3D image conversion apparatus 100 determines that the person object is situated in front of the building object. The 3D image conversion apparatus 100 obtains the depth information 321 of "10" for the person object and the depth information 324 of "20" for the building object, thus obtaining the depth information such that the person object is situated in front of the building object. For example, the 3D image conversion apparatus 100 obtains depth information based on arranged positions of objects.

The 3D image conversion apparatus 100 may, according to an example, also obtain depth information based on the object designation order. For example, the 3D image conversion apparatus 100 may obtain depth information of "10" for a person object which is designated first. For example, the 3D image conversion apparatus 100 may store a precedence relationship among objects in a general outdoor landscape image, and indicate designation of an object based on the precedence relationship.

As described above, the 3D image conversion apparatus 100 may obtain depth information for respective objects in various ways.

Referring to FIG. 3I, the 3D image conversion apparatus 100 arranges objects identified based on the obtained depth information to generate and display a 3D image in operation S209. The 3D image conversion apparatus 100 may generate and display a 3D image in which the obtained depth information is reflected into corresponding objects 331 to 335. The person object 331 in the 3D image illustrated in FIG. 3I is displayed larger than the person object 301 in the 2D image illustrated in FIG. 3A, because the person object 331 in the 3D image has relatively low depth information and thus is displayed in front of the other objects 332 to 335 in the 3D image. Herein, the 2D image 300 may be based on various formats, such as jpg, dib, jpeg, gif, tif, png, and so forth, or may be a raw file. The 3D image conversion apparatus 100 may provide different images viewed from various viewpoints based on a viewpoint change command, as will be described below.

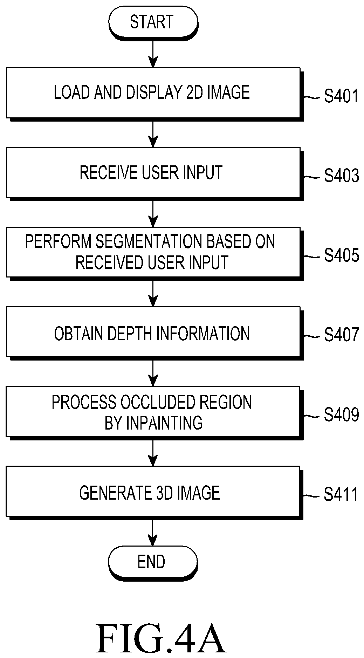

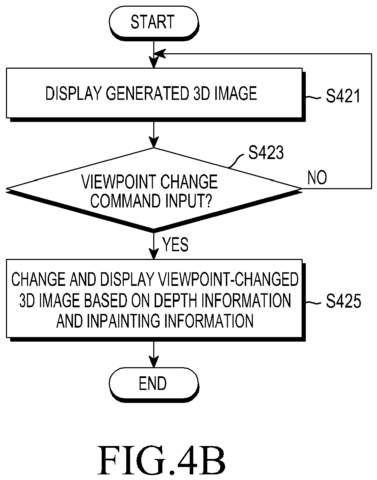

FIG. 4A is a flowchart illustrating a method for controlling a 3D image conversion apparatus according to an embodiment of the present disclosure. FIG. 4B is a flowchart illustrating a method for controlling a 3D image conversion apparatus according to an embodiment of the present disclosure.

Referring to FIG. 4A, operations S401 to S407 are the same as operations S201 to S207 of FIG. 2, and thus will not be described. The 3D image conversion apparatus 100 processes a region occluded by a front object by performing inpainting with respect to objects after obtaining depth information in operation S409. Herein, inpainting may correspond to an operation of reconstructing a part of an image if the part of the image is lost or distorted. Inpainting may correspond to an operation of reconstructing a region occluded by an object if a viewpoint is changed for a 3D image. Inpainting may be performed by copying a texture of a part around a part to be reconstructed and pasting the copied texture to the part to be reconstructed. For example, the 3D image conversion apparatus 100 may perform inpainting by copying a texture of a part around a part occluded by a particular object and pasting the copied texture to the occluded part. The 3D image conversion apparatus 100 provides the inpainting-processed 3D image upon receiving a viewpoint change input, and thus the user may see the 3D image from various viewpoints. The 3D image conversion apparatus 100 generates and displays the 3D image based on depth information and inpainting results in operation S411.

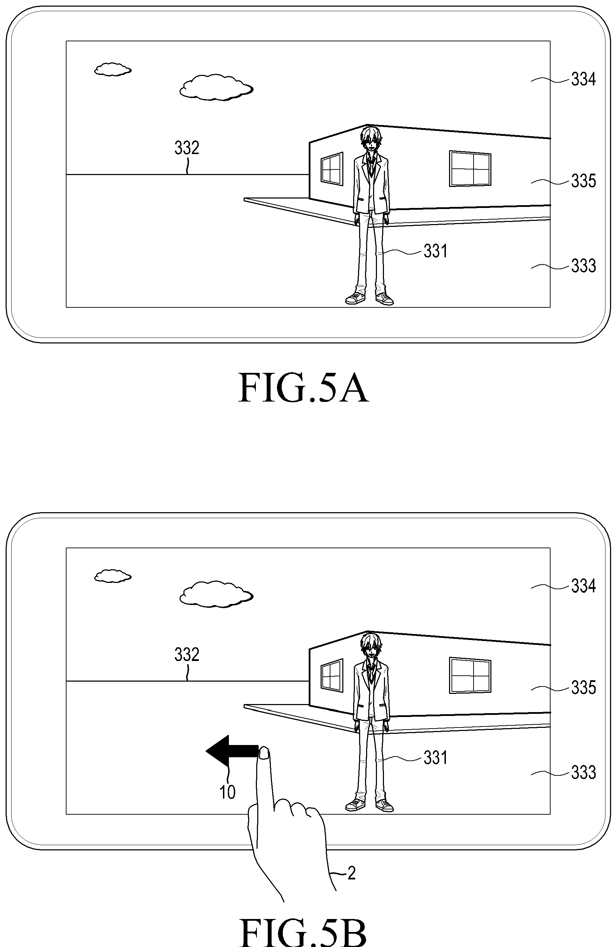

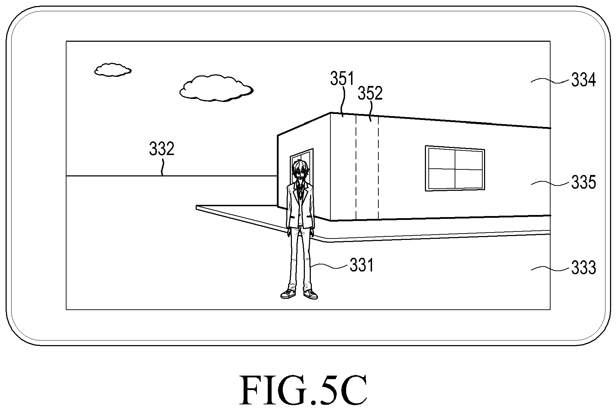

FIG. 4B is a flowchart illustrating a method for controlling a 3D image conversion apparatus according to an embodiment of the present disclosure. The control method illustrated in FIG. 4B will be described below with reference to FIGS. 5A, 5B, and 5C.

FIGS. 5A, 5B, and 5C illustrate a method for controlling a 3D image conversion apparatus according to an embodiment of the present disclosure.

Referring to FIGS. 4B, 5A, 5B, and 5C, in operation S421, the 3D image conversion apparatus 100 generates and displays the 3D image generated in operation S411 of FIG. 4A. For example, the 3D image conversion apparatus 100 displays a 3D image as illustrated in FIG. 5A. Herein, FIG. 5A shows the same 3D image as shown in FIG. 3I.

The 3D image conversion apparatus 100 receives a viewpoint change command from the user in operation S423. Herein, the viewpoint change command may be a command for changing a viewpoint from which the 3D image is viewed to have a different angle, and may include at least one of a viewpoint changing direction and a viewpoint changing level. For example, a user 2 may input a drag gesture 10 directed to the left from a point on the touch screen. The 3D image conversion apparatus 100 may recognize that a viewpoint is changed into a right viewpoint, based on the direction of the input drag gesture, the left direction. The 3D image conversion apparatus 100 may also recognize a viewpoint changing level from a touch distance of the drag gesture. The 3D image conversion apparatus 100 generates and displays the 3D image having the changed viewpoint based on the recognized the viewpoint changing direction and changing level in operation S425. For example, the 3D image conversion apparatus 100 may generate and display the viewpoint-changed 3D image as illustrated in FIG. 5C. More particularly, a building object 335 is displayed more at a right part thereof than the building object 335 illustrated in FIG. 5B because the viewpoint is changed into the right viewpoint.

Moreover, as can be seen from FIG. 5C, the 3D image conversion apparatus 100 reconstructs and displays a region 351 occluded by the person object 331 in FIG. 5B. More specifically, the 3D image conversion apparatus 100 may copy a text of a peripheral portion 352 of the occluded region 351 and reconstruct the occluded region 351 by using the copied text. As stated above, the user may appreciate the 3D image from various viewpoints.

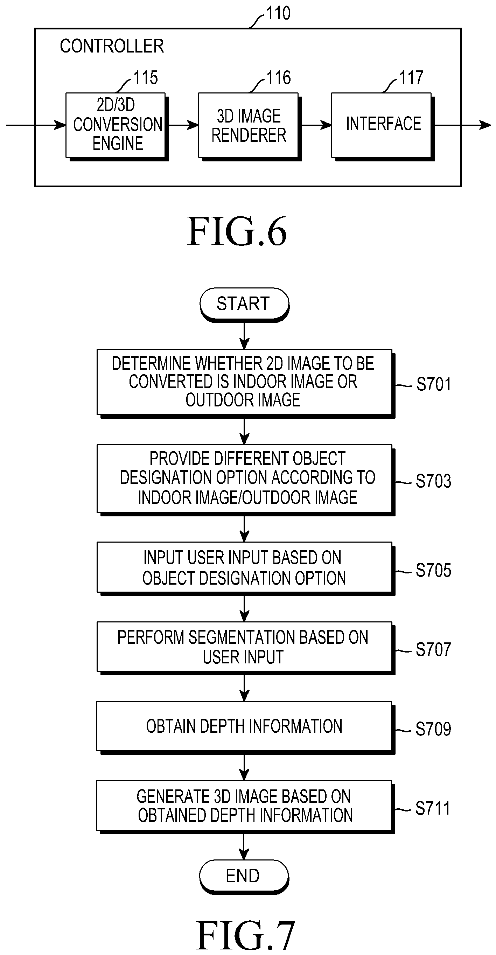

FIG. 6 is a block diagram illustrating a controller of a 3D image conversion apparatus according to an embodiment of the present disclosure.

Referring to FIG. 6, the controller 110 may include a 2D/3D conversion engine 115, a 3D image renderer 116, and an interface 117. The 2D/3D conversion engine 115 performs segmentation based on a user input for segmentation, disclosed in the flowchart illustrated in FIG. 4A, obtains depth information for each segmented object, and processes a region occluded by an object b using inpainting. The 3D image renderer 116 renders a 3D image based on at least one of segmentation information, depth information, and inpainting information. The interface 117 outputs the rendered 3D image to the touch screen controller 195. The interface 117 also may output the rendered 3D image to the mobile communication module 120 or the sub communication module 130 and transmit the rendered 3D image to another device.

FIG. 7 is a flowchart illustrating a method for controlling a 3D image conversion apparatus according to an embodiment of the present disclosure.

Referring to FIG. 7, the 3D image conversion apparatus 100 determines whether a 2D image designated for conversion into a 3D image is an outdoor landscape image or an indoor scenery image in operation S701. For example, the 3D image conversion apparatus 100 may determine whether a color of the sky in an image is distributed at a preset rate or more to determine whether the 2D image is an outdoor landscape image or an indoor scenery image. The 3D image conversion apparatus 100 may also determine whether the 2D image is an indoor scenery image or an outdoor landscape image based on GPS information recorded in meta data. The 3D image conversion apparatus 100 may determine whether the 2D image is an indoor scenery image or an outdoor landscape image by using various schemes, and it will be understood by those of ordinary skill in the art that the scope of the present disclosure is not limited by determination of the indoor scenery/outdoor landscape image.

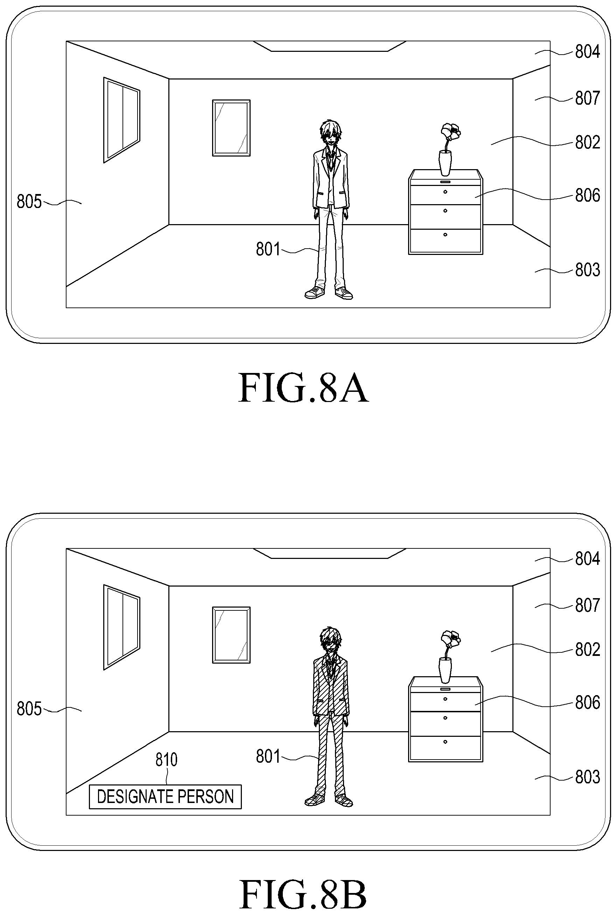

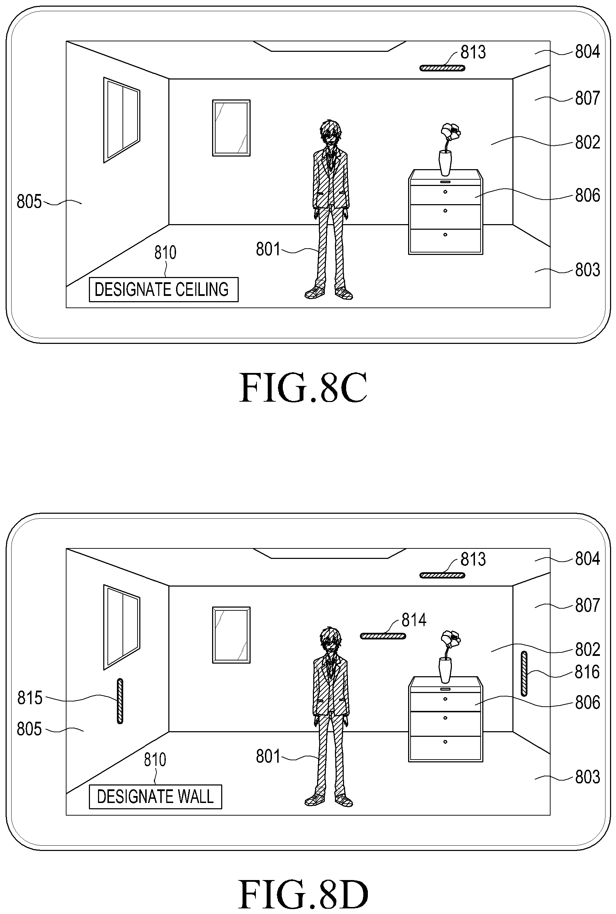

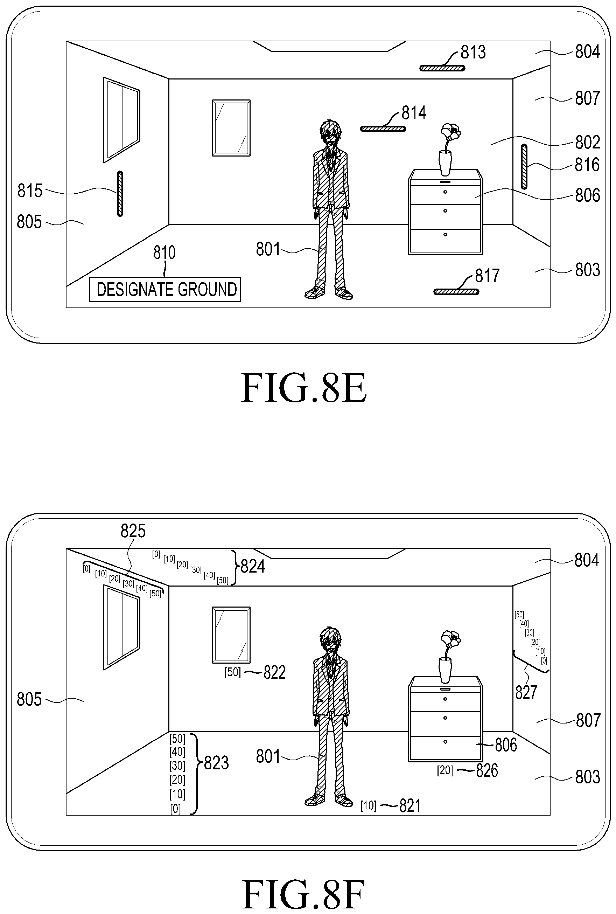

The 3D image conversion apparatus 100 provides a different object designation option according to whether the 2D image is the indoor scenery/outdoor landscape image in operation S703, and receives a user input based on the object designation option in operation S705. To be more specific, the 3D image conversion apparatus 100 may display a message on a different designating-object indication window according to whether the 2D image is the indoor scenery/outdoor landscape image. For example, in FIGS. 3B, 3C, 3D, 3E, 3F, and 3G, the 3D image conversion apparatus 100 displays a message inviting designation of an object for a person, the horizon, the ground, the key, or a building, in the 2D indoor scenery image on the designating-object indication window. Referring to FIGS. 8B, 8C, 8D, and 8E, the 3D image conversion apparatus 100 displays messages inviting designation of objects for a person, a ceiling, a wall, and the ground in a 2D indoor scenery image on the designating-object indication window.

The 3D image conversion apparatus 100 performs segmentation based on the received user input in operation S707 and obtains depth information for segmented objects in operation S709. The 3D image conversion apparatus 100 generates a 3D image based on the obtained depth information in operation S711.

FIGSs. 8A, 8B, 8C, 8D, 8E, and 8F illustrate a 3D conversion process for an indoor scenery image according to an embodiment of the present disclosure.

Referring to FIG. 8A, the 3D image conversion apparatus 100 displays a 2D image obtained by capturing an indoor scenery. The 2D image obtained by capturing the indoor scenery illustrated in FIG. 8A may include a person 801, a rear wall 802, the ground 803, a ceiling 804, first and second side walls 805 and 807, and furniture 806.

Referring to FIG. 8B, the user inputs a user input 811 for an object of the person 801 by using a finger or a pen 1. The user may arbitrarily input the user input 811 for the person object 801. The user may input the user input 811 based on a preset object designation order indicated on a designating-object indication window 810.

The 3D image conversion apparatus 100 may store the preset object designation order. For example, the 3D image conversion apparatus 100 may store an object designation order of person-ceiling-wall-ground for the indoor scenery image. The 3D image conversion apparatus 100 indicates an object to be designated on the designating-object indication window 810 based on the stored object designation order. In the embodiment illustrated in FIG. 8B, the 3D image conversion apparatus 100 displays a message inviting designation of a person on the designating-object indication window 810. The preset object designation order is merely an example, and it will be understood by those of ordinary skill in the art that the object designation order may be changed. Moreover, it will also be understood that various types of objects may be added to or replaced by the person, the ceiling, the wall, and the ground.

Referring to FIGS. 8C, 8D, and 8E, the 3D image conversion apparatus 100 may further receive a user input with respect to other objects. The 3D image conversion apparatus 100 may receive user inputs 813 to 817 with respect to the ceiling object, the wall object, and the ground object. For example, the 3D image conversion apparatus 100 may display a message inviting designation of the ceiling object, the wall object, and the ground object on the designating-object indication window 810.

Referring to FIG. 8F, the 3D image conversion apparatus 100 may perform segmentation based on the respective user inputs, and obtain depth information according to the segmentation results. For example, the 3D image conversion apparatus 100 may obtain depth information 821 to 827 for the respective objects and generate a 3D image based on the depth information 821 to 827.

As described above, the 3D image conversion apparatus 100 according to the present disclosure determines the indoor scenery and the outdoor landscape, and provides a different object designation option based on the determination result.

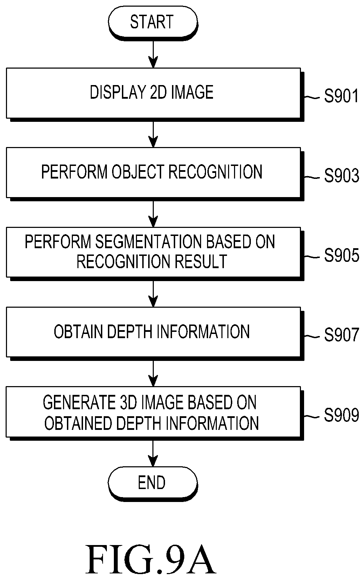

FIG. 9A is a flowchart illustrating a method for controlling a 3D image conversion apparatus according to an embodiment of the present disclosure.

Referring to FIG. 9A, on the contrary to the foregoing description, the 3D image conversion apparatus 100 may perform segmentation by automatically recognizing an object without receiving a user input.

The 3D image conversion apparatus 100 loads a 2D image to be converted into a 3D image in operation S901. The 3D image conversion apparatus 100 performs object recognition in operation S903. For example, the 3D image conversion apparatus 100 may store a face recognition program or algorithm, and recognize a face of a person in a 2D image based on the stored face recognition program. Once the 3D image conversion apparatus 100 recognizes a face of a person, it may recognize an object connected to the recognized face as a person object. Moreover, the 3Dimage conversion apparatus 100 may recognize a sky object based on color determination. Based on various schemes described above, the 3D image conversion apparatus may recognize various objects in a 2D image.

The 3D image conversion apparatus 100 performs segmentation based on the recognition result in operation S905, and obtains depth information for each segmented object in operation S907. The 3D image conversion apparatus 100 generates a 3D image based on the obtained depth information in operation S909.

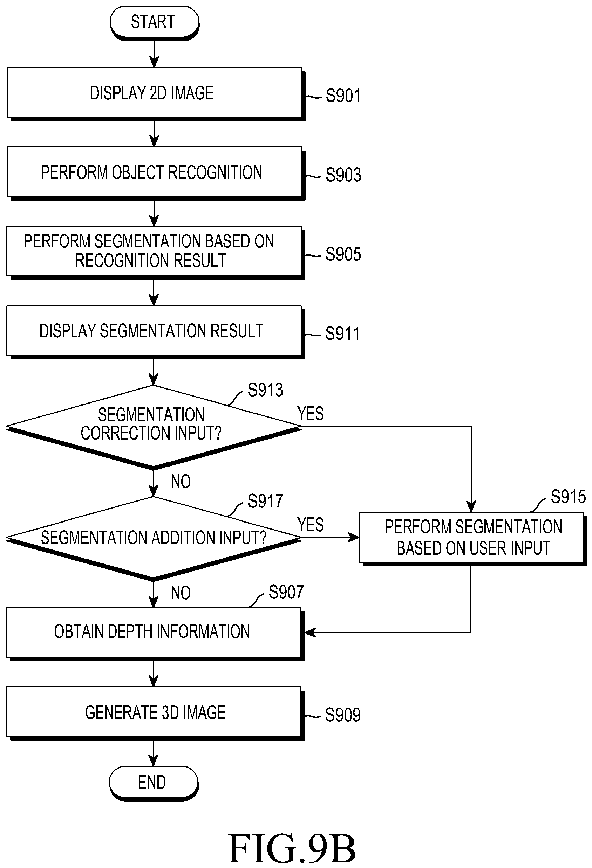

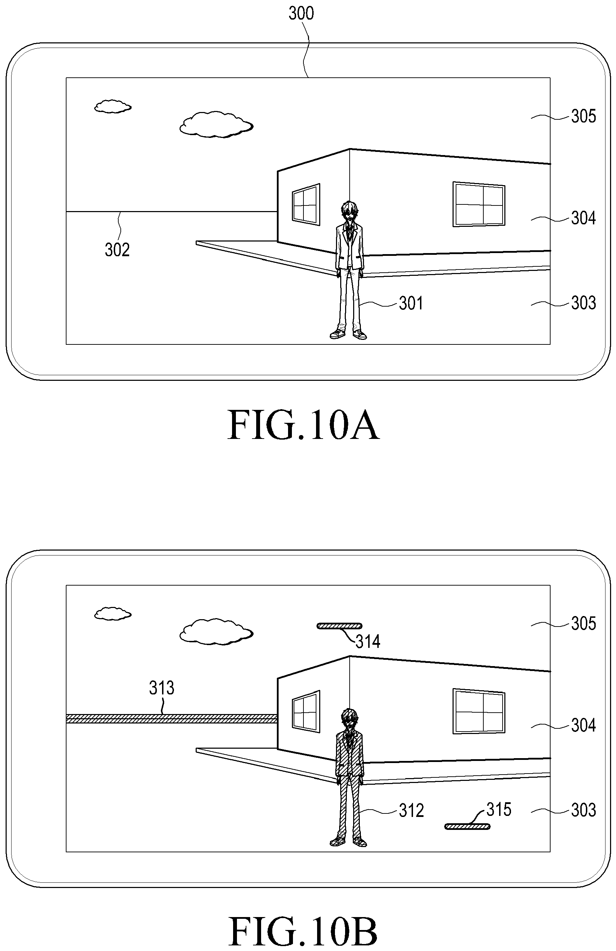

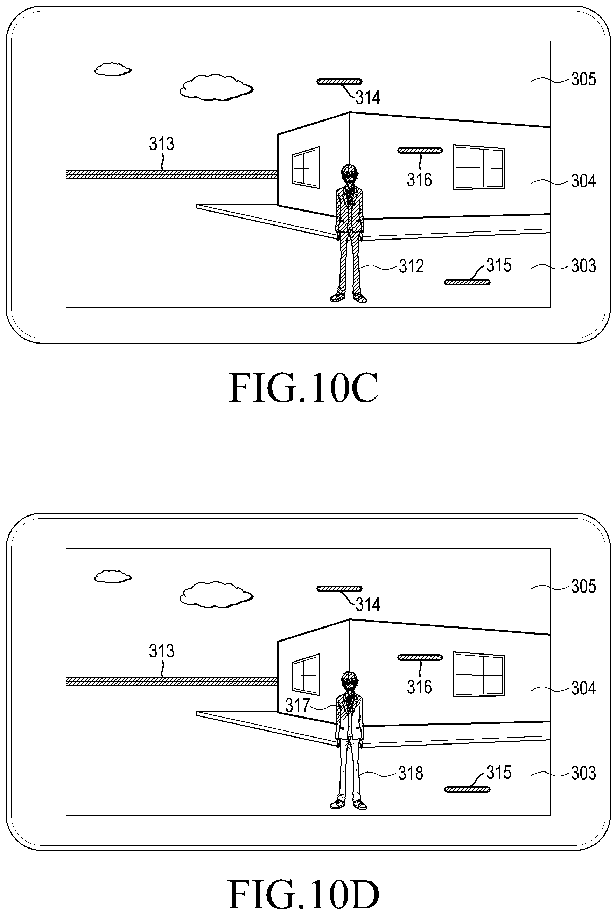

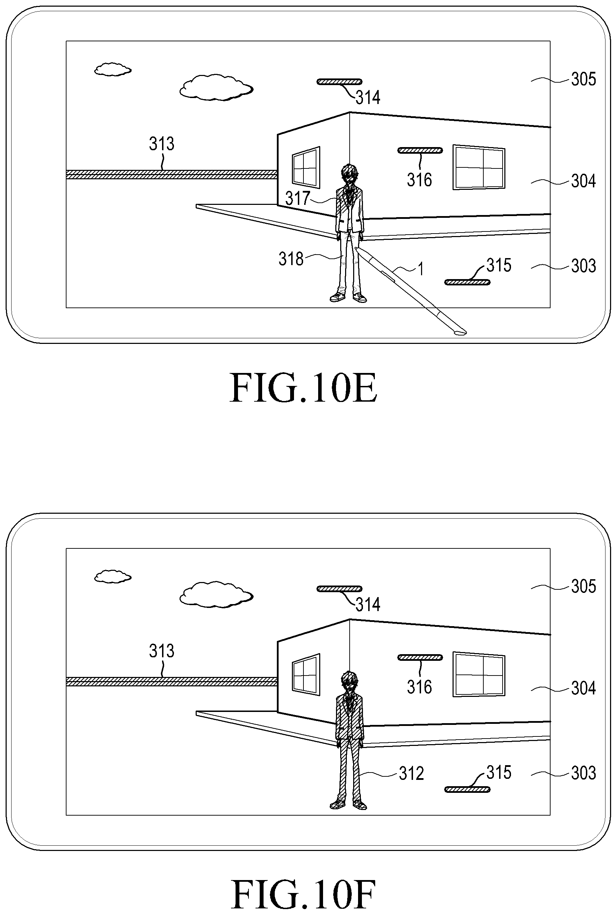

FIG. 9B is a flowchart illustrating a method for controlling a 3D image conversion apparatus according to an embodiment of the present disclosure. The control method illustrated in FIG. 9B will be described below with reference to FIGS. 10A, 10B, 10C, 10D, 10E, and 10F.

FIGS. 10A, 10B, 10C, 10D, 10E, and 10F illustrate a method for controlling a 3D image conversion apparatus according to an embodiment of the present disclosure.

Referring to FIGS. 9B, 10A, and 10B, operations S901 to S905 of FIG. 9B have already been described with reference to FIG, 9A, and thus will not be described. The 3D image conversion apparatus 100 loads and displays a 2D image as illustrated in FIG. 10A. The 3D image conversion apparatus 100 displays a segmentation result for object identification in operation S911. More specifically, the 3D image conversion apparatus 100 displays a segmentation result as illustrated in FIG. 10B. However, the 3D image conversion apparatus 100 automatically performs segmentation without receiving a user input as in operations S903 and S905, such that some objects may be missed during segmentation or an error may occur during segmentation with respect to an object.

For example, the 3D image conversion apparatus 100 may display a segmentation result as illustrated in FIG. 10B, but in FIG. 10B, the building object 304 has not been segmented. For example, the 3D image conversion apparatus 100 may miss segmentation of the building object 304.

Referring to FIGS. 9B and 10C, the user inputs modification of segmentation in operation S913 or additional input in operation S915. That is, in operation S913, the 3D image conversion apparatus 100 determines if segmentation correction input is received. If it is determined in operation S913 that segmentation correction input is received, the 3D image conversion apparatus 100 performs segmentation in operation S915. On the other hand, if it is determined in operation S913 that segmentation correction input is not received, the 3D image conversion apparatus 100 determines if segmentation addition input is received in operation S917. If it is determined in operation S917 that segmentation addition input is received, the 3D image conversion apparatus 100 performs segmentation in operation S915. For instance, the user may additionally input a user input 316 with respect to the building object 304, and the 3D image conversion apparatus 100 performs segmentation in operation S915. On the other hand, if it is determined in operation S917 that segmentation addition input is not received, the 3D image conversion apparatus 100 obtains depth information for each segmented object in operation S907 and generates a 3D image based on the obtained depth information in operation S909.

Referring to FIGS. 10D, 10E, and 10F, if only a part 317 of the person object is segmented, the user designates the other part 318 to input an additional input as illustrated in FIG, 10E, in operation S915. Thus, the 3D image conversion apparatus 100 completes segmentation as in FIG. 10F. While the foregoing description has been made based on an example where segmentation is performed automatically, it would be obvious to those of ordinary skill in the art that when segmentation is performed based on a user input inputted as illustrated in FIG. 2, modification or addition may also be performed with respect to the segmentation result.

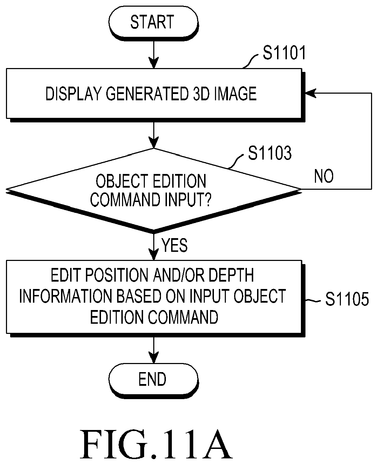

FIG. 11A is a flowchart illustrating a method for controlling a 3D image conversion apparatus according to an embodiment of the present disclosure.

Referring to FIG. 11A, the 3D image conversion apparatus 100 displays a generated 3D image in operation S1101. The user may desire to additionally edit the generated 3D image. For example, the user may desire to modify depth information of a particular object included in the generated 3D image. The user may also desire to modify a position of the particular object. To this end, the user may input an object edition command in operation S1103. The 3D image conversion apparatus 100 edits and displays at least one of the position and the depth information of the object based on the input object edition command in operation S1105.

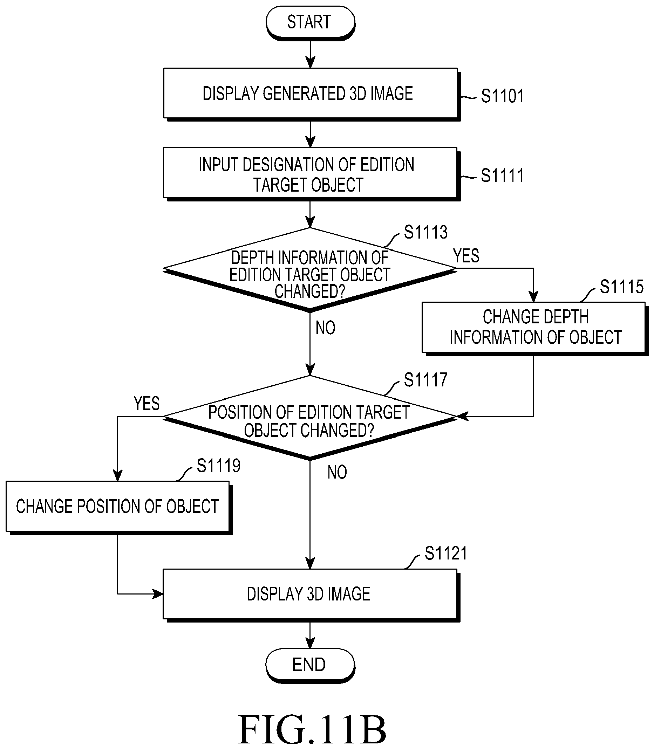

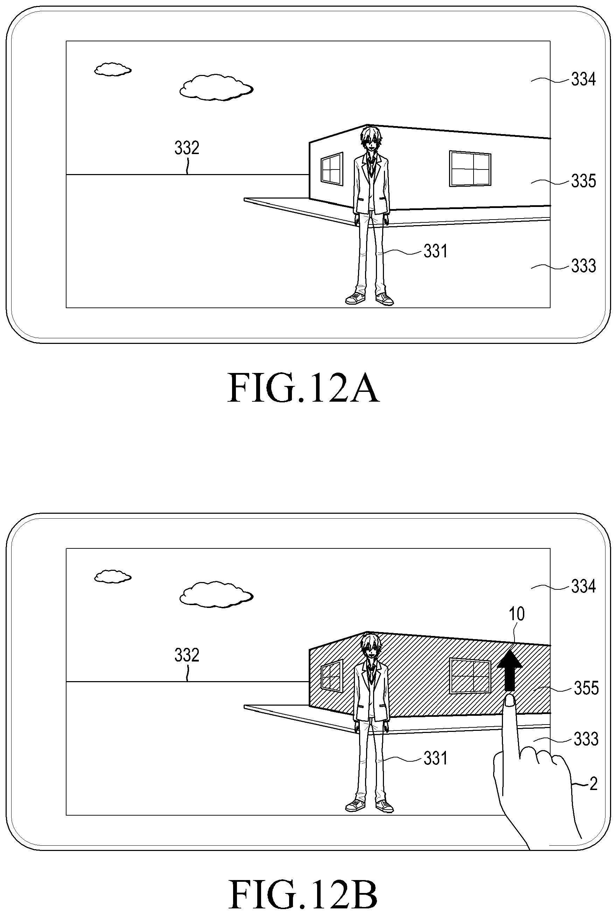

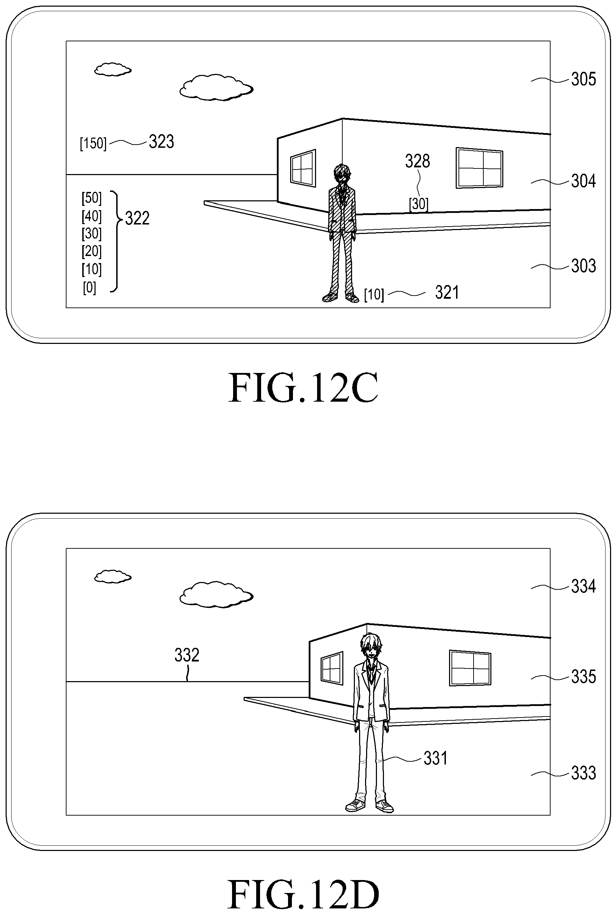

FIG. 11B is a flowchart illustrating a method for controlling a 3D image conversion apparatus according to an embodiment of the present disclosure. The control method illustrated in FIG. 11B will be described below with reference to FIGS. 12A, 12B, 12C, and 12D.

FIGS. 12A, 12B, 12C, and 12D illustrate a method for controlling a 3D image conversion apparatus according to an embodiment of the present disclosure.

Referring to FIGS. 11B and 12A, the 3D image conversion apparatus 100 displays a generated 3D image in operation S1101. For example, the 3D image conversion apparatus 100 may display a 3D image as illustrated in FIG. 12A. Herein, the 3D image illustrated in FIG. 12A may be the same as the 3D image illustrated in FIG. 3I.

Referring to FIG. 12B, the 3D image conversion apparatus 100 receives an object edition command in operation S1111. For example, the user 2 may designate a building object 335 and input an upward drag gesture (or drag-up gesture) 10 as an object edition command. The 3D image conversion apparatus 100 analyzes the received object edition command to re-generate and display the 3D image into which the object edition command is reflected.

Referring to FIG. 12C, if the object edition command is intended to change depth information of an edition target object in operation S1113 ('Yes'), the 3D image conversion apparatus 100 changes depth information of the object in operation S1115 and regenerates and displays the 3D image to which the changed depth information is applied in operation S1121. That is, in operation S1117, the 3D image conversion apparatus 100 determines if position of edition target object is changed. If it is determined in operation S1117 that position of edition target object is changed, the 3D image conversion apparatus 100 changes position of the object in operation S1119 and displays the 3D image in operation S1121. For example, the 3D image conversion apparatus may change depth information 328 of the building object 335 into "30". For example, the 3D image conversion apparatus 100 analyzes the drag-up gesture as a command for increasing a level of the depth information and reflects the command.

The object edition command is not limited to the drag-up gesture, and implemented by drag gestures in various directions. For example, if a downward drag gesture (or drag-down gesture) is input, the 3D image conversion apparatus 100 may reduce depth information of the object or lower the position of the object. The object edition command is not limited to a drag gesture and may be implemented with various forms of gestures, such as a flick gesture, tilting, a rotation gesture, and the like. The object edition command is not limited to a gesture input and may be implemented by manipulation of a button, such as a soft key.

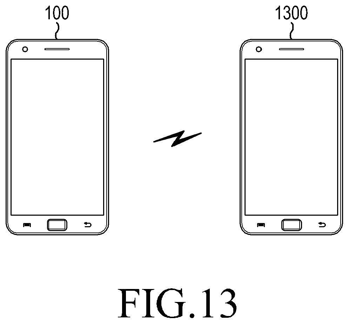

FIG. 13 illustrates a communication system according to an embodiment of the present disclosure.

Referring to FIG. 13, the communication system may include the 3D image conversion apparatus 100 and a second terminal 1300. Herein, the 3D image conversion apparatus 100 will be referred to as a first terminal 100 for convenience' sake.

The first terminal 100 and the second terminal 1300 transmit and receive data to and from each other. For example, the first terminal 100 may transmit and receive data to and from the second terminal 1300 by using the mobile communication module 120 or the sub communication module 130. For example, the first terminal 100 transmits and receives data to and from the second terminal 1300 by using a MMS, the Internet, or short-range communication.

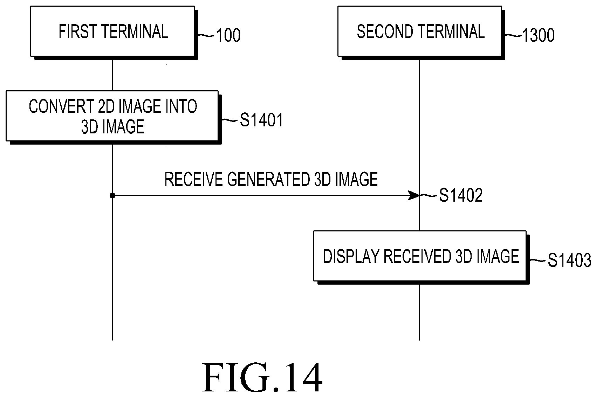

FIG. 14 is a ladder diagram for describing operations of a first terminal and a second terminal according to an embodiment of the present disclosure.

Referring to FIG. 14, the first terminal 100 converts a stored or captured 2D image into a 3D image in operation S1401. The first terminal 100 generates a 3D image according to various embodiments described above. The second terminal 1300 receives the generated 3D image from the first terminal 100 in operation S1402. The second terminal 1300 displays the received 3D image in operation S1403. Herein, the user of the second terminal 1300 may appreciate the received 3D image or change the viewpoint of the received 3D image to appreciate the 3D image.

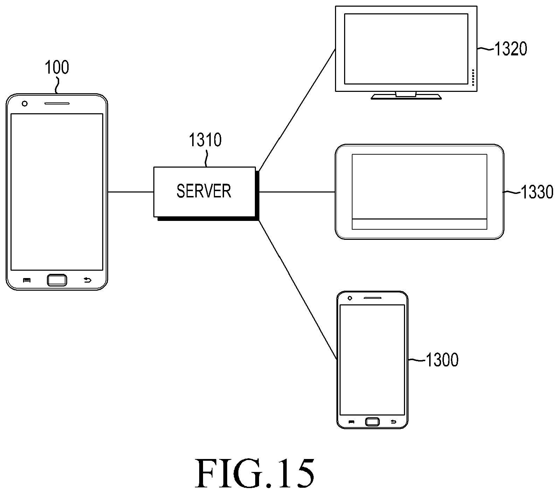

FIG. 15 illustrates a communication system according to an embodiment of the present disclosure.

Referring to FIG. 15, the first terminal 100 may be connected to a server 1310 that may be connected to second to fourth terminals 1300, 1320, and 1330. Herein, the server 1310 transmits and receives data to and from the first terminal 100 and the second to fourth terminals 1300, 1320, and 1330. The first terminal 100 and the second to fourth terminals 1300, 1320, and 1330 downloads and uses the same application from the server 1310, and relay data transmission and reception between the first terminal 100 and the second to fourth terminals 1300, 1320, and 1330. For example, the server 1310 may include a communication unit for transmitting and receiving data and a controller for performing 3D image conversion as will be described below. The server 1310 may also include a touch screen that displays a 2D image and a 3D image and receives a user input. The server 1310 may also include a storage for storing a 2D image or a 3D image.

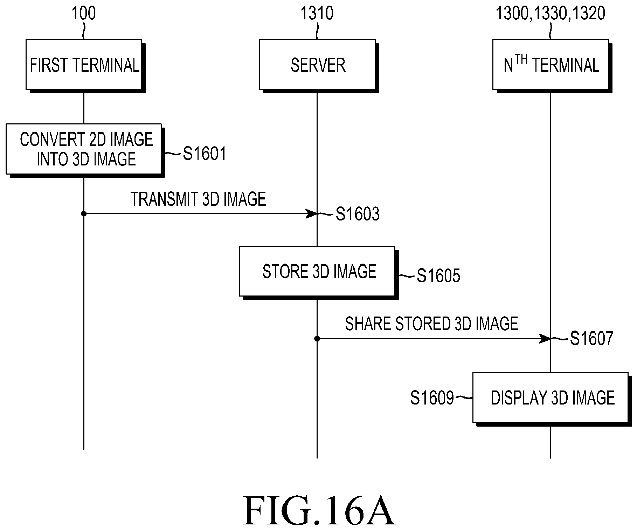

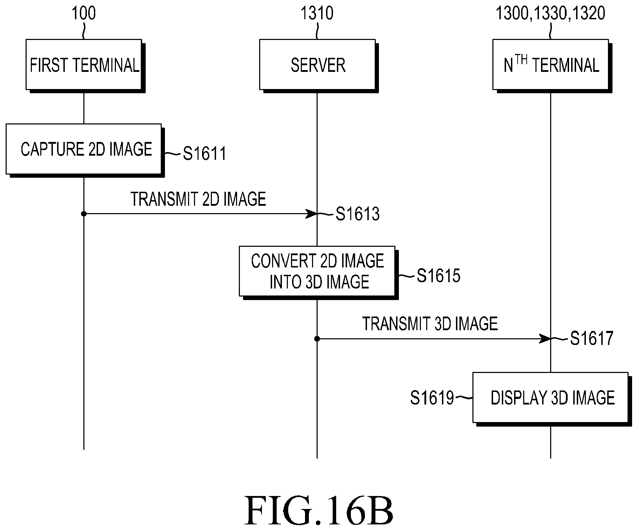

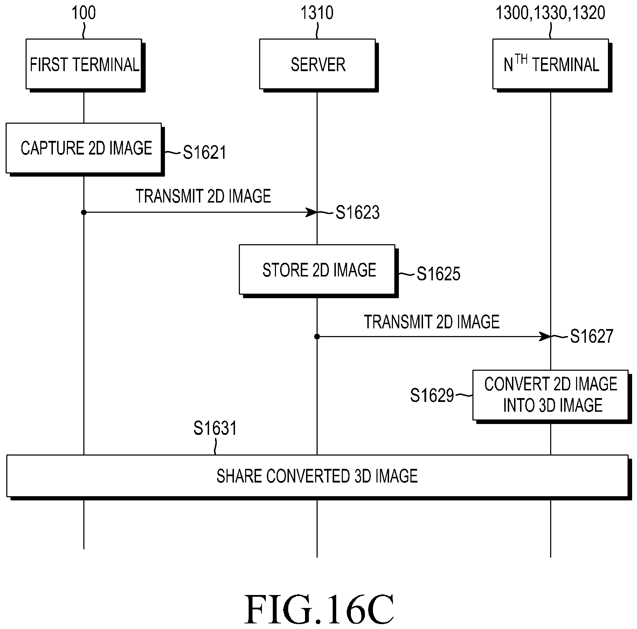

The operations of the server 1310 and the first to fourth terminals 100, 1300, 1320, and 1330 will be described below with reference to FIGS. 16A, 16B, and 16C.

FIGS. 16A, 16B, and 16C are ladder diagrams for describing respective operations of a server, a first terminal, and a second terminal according to an embodiment of the present disclosure.

Referring to FIG. 16A, the first terminal 100 converts a stored or captured 2D image into a 3D image in operation S1601. The first terminal 100 generates a 3D image according to various embodiments described above.

The server 1310 receives the generated 3D image from the first terminal 100 in operation S1603. The server 1310 stores the received 3D image in operation S1605, and transmits the stored 3D image to the second to fourth terminals 1300, 1320, and 1330 in operation S1607. The second to fourth terminals 1300, 1320, and 1330 display the received 3D image in operation S1609.

Referring to FIG. 16B, the first terminal 100 captures and generates a 2D image in operation S1611. The first terminal 100 transmits the generated 2D image to the server 1310 in operation S1613, and the server 1310 converts the received 2D image into a 3D image in operation S1615. The server 1310 performs 3D image conversion in various ways. The server 1310 transmits the converted 3D image to the second to fourth terminals 1300, 1320, and 1330 in operation S1617. The second to fourth terminals 1300, 1320, and 1330 display the received 3D image in operation S1619.

Referring to FIG. 16C, the first terminal 100 captures and generates a 2D image in operation S1621. The first terminal 100 transmits the generated 2D image to the server 1310 in operation S1623, and the server 1310 stores the received 2D image in operation S1625. The server 1310 transmits the stored 2D image to the second to fourth terminals 1300, 1320, and 1330 in operation S1627. The second to fourth terminals 1300, 1320, and 1330 convert the received 2D image into a 3D image in operation S1629. The second to fourth terminals 1300, 1320, and 1330 share the converted 3D image with the first terminal 100 or the server 1310 in operation S1631. For example, the second to fourth terminals 1300, 1320, and 1330 may transmit the converted 3D image to the first terminal 100 or the server 1310.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

The 3D image conversion apparatus may receive and store the program from a program providing device connected in a wired or wireless manner. The program providing device may include a memory for storing a program including instructions for instructing the 3D image conversion apparatus to execute the claimed method for controlling the 3D image conversion apparatus, information necessary for the method for controlling the 3D image conversion apparatus, a communication unit for performing wired or wireless communication with the 3D image conversion apparatus, and a controller for transmitting a corresponding program to the 3D image conversion apparatus at the request of the 3D image conversion apparatus or automatically.

According to various embodiments of the present disclosure, the 3D image conversion apparatus and the method for controlling the same are provided in which an object is designated by a simple user input for conversion of a 2D image into a 3D image. Thus, the user may designate an object by simply inputting the user input, such that the 3D image may be readily generated and viewed. Moreover, an object designation order suitable for an indoor scenery/outdoor landscape image is disclosed and object designation appropriate for a corresponding environment may be performed.

Other effects that may be obtained or expected from the embodiment of the present disclosure are explicitly or implicitly disclosed in the detailed description of the embodiment of the present disclosure. For example, various effects expected from the embodiment of the present disclosure have been disclosed in the detailed description of the present disclosure.

While the present disclosure has been shown and described with reference to various embodiments thereof, it will be understood by those skilled in the art that various changes in form and details may be made therein without departing from the scope of the present disclosure as defined by the appended claims.

## Claims

1. A method for controlling a three-dimensional (3D) image conversion apparatus (100) that converts a two-dimensional (2D) image into a 3D image, the method comprising:
displaying (S201, S401) the 2D image to be converted into the 3D image;
determining (S701) a scenery type of the 2D image;
displaying (S703) one or more messages inviting user designation of one or more object types included in the 2D image based on the scenery type;
receiving (S203, S403, S705) a user input within an inside of at least one object included in the 2D image corresponding to the or more object types, the user input designating a type of each of the at least one object;
obtaining (S205, S405, S707) boundaries of the at least one object included in the 2D image based on the location of the received user input;
segmenting the 2D image into at least one segmented object based on the obtained boundaries;
obtaining (S207, S407, S709) depth information of each of the at least one segmented object from the 2D image; and
generating (S209, S411, S711) the 3D image by arranging each of the at least one segmented object based on the obtained depth information.

2. The method of claim 1, further comprising performing inpainting (S409) with respect to a region occluded by the at least one segmented object before the generating (S411) of the 3D image after the obtaining (S407) of the depth information.

3. The method of claim 1, further comprising displaying the generated 3D image.

4. The method of claim 1, further comprising displaying the at least one object differently in response to the user input.

5. The method of claim 1, wherein the obtaining (S207, S407) of the depth information further comprises obtaining the depth information based on an occlusion relationship between the segmented objects.

6. The method of claim 1, wherein the obtaining (S207, S407) of the depth information further comprises obtaining the depth information based on arrangement positions of the segmented objects.

7. A three-dimensional (3D) image conversion apparatus (100) for converting a two-dimensional (2D) image into a 3D image, the 3D image conversion apparatus (100) comprising:
a touch screen (190) configured to display (S201, 401) the 2D image to be converted into the 3D image, display (S703) one or more messages inviting user designation of one or more object types included in the 2D image based on a scenery type of the 2D image, and receive (S203, S403, S705) a user input within an inside of at least one object included in the 2D image corresponding to the one or more object types, the user input designating a type of each of the at least one object; and
a controller (110) configured to determine (S701) the scenery type of the 2D image, obtain (S205, S405, S707) boundaries of the at least one object included in the 2D image based on the location of the received user input, to segment the 2D image into at least one segmented object based on the obtained boundaries, to obtain (S207, S407, S709) depth information of each of the at least one object from the 2D image, and to generate (S209, S411, S711) the 3D image by arranging each of the at least one segmented object based on the obtained depth information.

8. The 3D image conversion apparatus of claim 7, wherein the controller (110) is further configured to perform inpainting (S409) with respect to a region occluded by the at least one segmented object.

9. The 3D image conversion apparatus of claim 7, wherein the touch screen is further configured to display the generated 3D image.

10. The 3D image conversion apparatus of claim 7, wherein the touch screen (190) is further configured to receive (S423) a viewpoint change command for changing a viewpoint from which the generated 3D image is viewed.

11. The 3D image conversion apparatus of claim 7, wherein the controller (110) is further configured to obtain (S207, S407) the depth information based on an occlusion relationship between the segmented objects.

12. The 3D image conversion apparatus of claim 7, wherein the controller (110) is further configured to obtain (S207, S407) the depth information based on arrangement positions of the segmented objects.

## Patentansprüche

1. Ein Verfahren zur Steuerung einer dreidimensionalen (3D) Bildumwandlungsvorrichtung (100) zur Umwandlung eines zweidimensionalen (2D) Bildes in ein 3D-Bild, wobei das Verfahren Folgendes umfasst:
Anzeigen (S201, S401) des in das 3D-Bild umzuwandelnden 2D-Bildes;
Bestimmen (S701) eines Landschaftstyps des 2D-Bildes;
Anzeigen (S703) mindestens einer auf dem Landschaftstyp basierenden Nachricht mit der Aufforderung des Benutzers zur Festlegung mindestens eines in dem 2D-Bild enthaltenen Objekttyps;
Empfangen (S203, S403, S705) einer Benutzereingabe innerhalb eines Innenbereichs mindestens eines in dem 2D-Bild enthaltenen Objekts, das dem mindestens einen Objekttyp entspricht, wobei die Benutzereingabe einen Typ jedes Objekts unter dem mindestens einen Objekt festlegt;
Erfassen (S205, S405, S707) von Grenzen des mindestens einen in dem 2D-Bild enthaltenen Objekts basierend auf der Position der empfangenen Benutzereingabe;
Segmentieren des 2D-Bildes in zumindest ein segmentiertes Objekt basierend auf den erfassten Grenzen;
Erfassen (S207, S407, S709) von Tiefeninformationen jedes segmentierten Objekts unter dem mindestens einen segmentierten Objekt aus dem 2D-Bild; und
Erzeugen (S209, S411, S711) des 3D-Bildes, indem jedes segmentierte Objekt unter dem mindestens einen segmentierten Objekt basierend auf den erfassten Tiefeninformationen angeordnet wird.

2. Das Verfahren nach Anspruch 1, das weiter umfasst, dass nach der Erfassung (S407) der Tiefeninformationen eine Bildfehlerkorrektur (S409) in Bezug auf einen durch das mindestens eine segmentierte Objekt verdeckten Bereich durchgeführt wird, bevor das 3D-Bild erzeugt wird (S411).

3. Das Verfahren nach Anspruch 1, das weiter die Anzeige des erzeugten 3D-Bildes umfasst.

4. Das Verfahren nach Anspruch 1, das weiter umfasst, dass das mindestens eine Objekt infolge der Benutzereingabe unterschiedlich angezeigt wird.

5. Das Verfahren nach Anspruch 1, wobei die Erfassung (S207, S407) der Tiefeninformationen weiter umfasst, dass die Tiefeninformationen basierend auf einem Verdeckungsverhältnis zwischen den segmentierten Objekten erfasst werden.

6. Das Verfahren nach Anspruch 1, wobei die Erfassung (S207, S407) der Tiefeninformationen weiter umfasst, dass die Tiefeninformationen basierend auf Anordnungspositionen der segmentierten Objekte erfasst werden.

7. Eine dreidimensionale (3D) Bildumwandlungsvorrichtung (100) zur Umwandlung eines zweidimensionalen (2D) Bildes in ein 3D-Bild, wobei die 3D-Bildumwandlungsvorrichtung (100) Folgendes umfasst:
einen Berührungsbildschirm (190), der eingerichtet ist, um das in das 3D-Bild umzuwandelnde 2D-Bild anzuzeigen (S201, 401), um mindestens eine auf einem Landschaftstyp des 2D-Bildes basierende Nachricht mit der Aufforderung des Benutzers zur Festlegung mindestens eines in dem 2D-Bild enthaltenen Objekttyps anzuzeigen (S703) und um eine Benutzereingabe innerhalb eines Innenbereichs mindestens eines in dem 2D-Bild enthaltenen Objekts zu empfangen (S203, S403, S705), das dem mindestens einen Objekttyp entspricht, wobei die Benutzereingabe einen Typ jedes Objekts unter dem mindestens einen Objekt festlegt; und
eine Steuereinheit (110), die eingerichtet ist, um den Landschaftstyp des 2D-Bildes zu bestimmen (S701), um Grenzen des mindestens einen in dem 2D-Bild enthaltenen Objekts basierend auf der Position der empfangenen Benutzereingabe zu erfassen (S205, S405, S707), um das 2D-Bild basierend auf den erfassten Grenzen in mindestens ein segmentiertes Objekt zu segmentieren, um Tiefeninformationen eines jeden Objekts unter dem mindestens einen Objekt aus dem 2D-Bild zu erfassen (S207, S407, S709) und um das 3D-Bild zu erzeugen (S209, S411, S711), indem jedes segmentierte Objekt unter dem mindestens einen segmentierten Objekt basierend auf den erfassten Tiefeninformationen angeordnet wird.

8. Die 3D-Bildumwandlungsvorrichtung nach Anspruch 7, wobei die Steuereinheit (110) weiter eingerichtet ist, um eine Bildfehlerkorrektur (S409) in Bezug auf einen Bereich durchzuführen, der durch das mindestens eine segmentierte Objekt verdeckt wird.

9. Die 3D-Bildumwandlungsvorrichtung nach Anspruch 7, wobei der Berührungsbildschirm weiter eingerichtet ist, um das erzeugte 3D-Bild anzuzeigen.

10. Die 3D-Bildumwandlungsvorrichtung nach Anspruch 7, wobei der Berührungsbildschirm (190) weiter eingerichtet ist, um einen Perspektivenwechselbefehl zur Änderung einer Perspektive zu empfangen (S423), aus der das erzeugte 3D-Bild angezeigt wird.

11. Die 3D-Bildumwandlungsvorrichtung nach Anspruch 7, wobei die Steuereinheit (110) weiter eingerichtet ist, um die Tiefeninformationen basierend auf einem Verdeckungsverhältnis zwischen den segmentierten Objekten zu erfassen (S207, S407).

12. Die 3D-Bildumwandlungsvorrichtung nach Anspruch 7, wobei die Steuereinheit (110) weiter eingerichtet ist, um die Tiefeninformationen basierend auf Anordnungspositionen der segmentierten Objekte zu erfassen (S207, S407).

## Revendications

1. Un procédé de commande d'un appareil de conversion d'images en trois dimensions (3D) (100) qui convertit une image en deux dimensions (2D) en une image 3D, le procédé comprenant :
l'affichage (S201, S401) de l'image 2D à convertir en l'image 3D,
la détermination (S701) d'un type de décor de l'image 2D,
l'affichage (S703) d'un ou de plusieurs messages invitant une désignation d'utilisateur d'un ou de plusieurs types d'objet inclus dans l'image 2D en fonction du type de décor,
la réception (S203, S403, S705) d'une entrée d'utilisateur à l'intérieur d'une partie intérieure d'au moins un objet inclus dans l'image 2D correspondant aux un ou plusieurs types d'objet, l'entrée d'utilisateur désignant un type de chacun des au moins un objet,
l'obtention (S205, S405, S707) de limites du au moins un objet inclus dans l'image 2D en fonction de l'emplacement de l'entrée d'utilisateur reçue,
la segmentation de l'image 2D en au moins un objet segmenté en fonction des limites obtenues,
l'obtention (S207, S407, S709) d'informations de profondeur de chacun des au moins un objet segmenté à partir de l'image 2D, et
la génération (S209, S411, S711) de l'image 3D par l'agencement de chacun des au moins un objet segmenté en fonction des informations de profondeur obtenues.

2. Le procédé selon la Revendication 1, comprenant en outre l'exécution d'une retouche (S409) par rapport à une zone occultée par le au moins un objet segmenté avant la génération (S411) de l'image 3D après l'obtention (S407) des informations de profondeur.

3. Le procédé selon la Revendication 1, comprenant en outre l'affichage de l'image 3D générée.

4. Le procédé selon la Revendication 1, comprenant en outre l'affichage du au moins un objet de manière différente en réponse à l'entrée d'utilisateur.

5. Le procédé selon la Revendication 1, où l'obtention (S207, S407) des informations de profondeur comprend en outre l'obtention des informations de profondeur en fonction d'une relation d'occultation entre les objets segmentés.

6. Le procédé selon la Revendication 1, où l'obtention (S207, S407) des informations de profondeur comprend en outre l'obtention des informations de profondeur en fonction de positions d'agencement des objets segmentés.

7. Un appareil de conversion d'images en trois dimensions (3D) (100) destiné à la conversion d'une image en deux dimensions (2D) en une image 3D, l'appareil de conversion d'images 3D (100) comprenant :
un écran tactile (190) configuré de façon à afficher (S201, 401) l'image 2D à convertir en l'image 3D, à afficher (S703) un ou plusieurs messages invitant une désignation d'utilisateur d'un ou de plusieurs types d'objet inclus dans l'image 2D en fonction d'un type de décor de l'image 2D et à recevoir (S203, S403, S705) une entrée d'utilisateur à l'intérieur d'une partie intérieure d'au moins un objet inclus dans l'image 2D correspondant aux un ou plusieurs types d'objet, l'entrée d'utilisateur désignant un type de chacun des au moins un objet, et
un dispositif de commande (110) configuré de façon à déterminer (S701) le type de décor de l'image 2D, à obtenir (S205, S405, S707) des limites du au moins un objet inclus dans l'image 2D en fonction de l'emplacement de l'entrée d'utilisateur reçue, à segmenter l'image 2D en au moins un objet segmenté en fonction des limites obtenues, à obtenir (S207, S407, S709) des informations de profondeur de chacun des au moins un objet à partir de l'image 2D et à générer (S209, S411, S711) l'image 3D par l'agencement de chacun des au moins un objet segmenté en fonction des informations de profondeur obtenues.

8. L'appareil de conversion d'images 3D selon la Revendication 7, où le dispositif de commande (110) est configuré en outre de façon à exécuter une retouche (S409) par rapport à une zone occultée par le au moins un objet segmenté.

9. L'appareil de conversion d'images 3D selon la Revendication 7, où l'écran tactile est configuré en outre de façon à afficher l'image 3D générée.

10. L'appareil de conversion d'images 3D selon la Revendication 7, où l'écran tactile (190) est configuré en outre de façon à recevoir (S423) une commande de modification de point de vue destinée à la modification d'un point de vue à partir duquel l'image 3D générée est vue.

11. L'appareil de conversion d'images 3D selon la Revendication 7, où le dispositif de commande (110) est configuré en outre de façon à obtenir (S207, S407) les informations de profondeur en fonction d'une relation d'occultation entre les objets segmentés.

12. L'appareil de conversion d'images 3D selon la Revendication 7, où le dispositif de commande (110) est configuré en outre de façon à obtenir (S207, S407) les informations de profondeur en fonction de positions d'agencement des objets segmentés.
